(19) **Europäisches Patentamt**
**European Patent Office**
**Office européen des brevets**

(11) **EP 2 896 634 B1**

(12) **EUROPEAN PATENT SPECIFICATION**

(45) Date of publication and mention
of the grant of the patent:
**04.05.2016 Bulletin 2016/18**

(51) Int Cl.:
***C08F 20/44*** *(2006.01)*      ***C08F 220/44*** *(2006.01)*
***D01F 6/18*** *(2006.01)*      ***D01F 6/38*** *(2006.01)*
***D01F 9/22*** *(2006.01)*

(21) Application number: **14151373.9**

(22) Date of filing: **16.01.2014**

(54) **Method for preparing a flame retardant modified acrylonitrile-based copolymer and a flame retardant fibrous material**

Verfahren zur Herstellung eines flammhemmenden Copolymer auf Basis eines modifizierten Acrylonitrils und eines flammhemmenden Fasermaterials

Procédé de préparation d'un copolymère à base d'acrylonitrile modifié ignifuge et matériau fibreux ignifuge

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.07.2015 Bulletin 2015/30**

(73) Proprietor: **Formosa Plastics Corporation**
**80660 Kaohsiung City (TW)**

(72) Inventors:
• **Liaw, Chi-Song**
**81465 Kaohsiung City (TW)**
• **Wu, Jin-Pon**
**81465 Kaohsiung City (TW)**
• **Shih, Kai-Yao**
**81465 Kaohsiung City (TW)**
• **Lee, Tsung-Hsi**
**81465 Kaohsiung City (TW)**
• **Chen, Hsiu**
**81465 Kaohsiung City (TW)**
• **Hsu, Ming-I**
**81465 Kaohsiung City (TW)**
• **Lung, Chin-Wang**
**81465 Kaohsiung City (TW)**
• **Chen, Chao-Cheng**
**81465 Kaohsiung City (TW)**
• **Hsieh, Chia-Yu**
**81465 Kaohsiung City (TW)**
• **Lin, Sheng-Hsun**
**81465 Kaohsiung City (TW)**

(74) Representative: **Stephens, Clare Jean**
**Page White & Farrer**
**Bedford House**
**John Street**
**London WC1N 2BF (GB)**

(56) References cited:
**EP-A1- 1 743 962       EP-A1- 1 798 318**
**US-A- 4 007 232        US-A- 4 091 066**
**US-A- 4 513 126        US-A- 6 048 955**
**US-A1- 2004 074 509**

**Description**

This invention relates to a method for preparing a flame retardant modified acrylonitrile-based copolymer and a flame retardant fibrous material comprising the flame retardant modified acrylonitrile-based copolymer.

Acrylic fiber is made from polyacrylonitrile, and has excellent chemical and physical properties, such as dyeing affinity, tactile feeling, and light resistance. However, it has poor flame retardance, which restricts its use for production of anti-flammable textile products, such as anti-flammable curtains, carpets, and clothes.

It has been found that acrylonitrile-based copolymer, which maintains the excellent chemical and physical properties of polyacrylonitrile, is a better candidate for making anti-flammable textiles.

In order to improve the flame retardance of acrylonitrile-based copolymer, several methods have been proposed to modify the acrylonitrile-based copolymer, such as addition of a halogen-containing monomer (which provides a flame retardant function), such as vinylidene chloride, and/or addition of flame retardant agents into a reaction system to form the modified acrylonitrile-based copolymer. Conventionally, the reaction system contains 20wt% to 50 wt% of vinylidene chloride. However, addition of the halogen-containing monomer in such an amount in the reaction system complicates the copolymerization reaction, and results in a considerable reduction in the polymerization degree of the modified acrylonitrile-based copolymer.

Therefore, an object of the present invention is to provide a method for preparing a flame retardant modified acrylonitrile-based copolymer that can overcome at least one of the aforesaid drawbacks associated with the prior art.

According to one aspect of this invention, there is provided a method for preparing a flame retardant modified acrylonitrile-based copolymer. The method comprises: (a) prepolymerizing a first composition to obtain a first prepolymer solution including a first prepolymer; (b) prepolymerizing a second composition to obtain a second prepolymer solution including a second prepolymer; and (c) mixing the first and second prepolymer solutions and subjecting a mixture of the first and second prepolymers to polymerization to obtain a flame retardant modified acrylonitrile-based copolymer solution containing a flame retardant modified acrylonitrile-based copolymer.

The first composition includes acrylonitrile, a halogen-containing vinyl monomer, at least one hydrophilic vinyl monomer, a polar solvent, and a reaction initiator. The halogen-containing vinyl monomer includes vinylidene chloride (VDC). Based on the total weight of vinylidene chloride, the hydrophilic vinyl monomer and acrylonitrile of the first composition, the vinylidene chloride of the first composition is in an amount ranging from 10 to 40 wt% and the hydrophilic vinyl monomer is in an amount ranging from 5 to 50 wt%. The first prepolymer has a weight average molecular weight ranging from 30, 000 to 40,000.

The second composition includes acrylonitrile, a halogen-containing vinyl monomer, the polar solvent, and the reaction initiator. The halogen-containing vinyl monomer of the second composition includes vinylidene chloride. Based on the total weight of vinylidene chloride and acrylonitrile of the second composition, vinylidene chloride of the second composition is in an amount ranging from 40 to 60 wt%.

The flame retardant modified acrylonitrile-based copolymer has a weight average molecular weight ranging from 50,000 to 80,000 and contains 30 to 46 wt% of vinylidene chloride monomer unit, 1 to 5 wt% of hydrophilic vinyl monomer unit, and 49 to 69 wt% of acrylonitrile monomer unit based on the total weight of the vinylidene chloride monomer unit, the hydrophilic vinyl monomer unit and the acrylonitrile monomer unit of the flame retardant modified acrylonitrile-based copolymer.

According to another aspect of this invention, there is provided a method for preparing a flame retardant modified acrylonitrile-based copolymer. The method comprises: (a) polymerizing a first composition to obtain a first copolymer solution including a first copolymer; (b) polymerizing a second composition to obtain a second copolymer solution including a second copolymer; and (c) mixing the first and second copolymer solutions to obtain a flame retardant modified acrylonitrile-based copolymer solution containing a flame retardant modified acrylonitrile-based copolymer blend.

The first composition includes acrylonitrile, a halogen-containing vinyl monomer, at least one hydrophilic vinyl monomer, a polar solvent, and a reaction initiator. The halogen-containing vinyl monomer includes vinylidene chloride. Based on the total weight of vinylidene chloride, the hydrophilic vinyl monomer and acrylonitrile of the first composition, vinylidene chloride of the first composition is in an amount ranging from 10 to 40 wt% and the hydrophilic vinyl monomer is in an amount ranging from 5 to 50 wt%. The first copolymer has a weight average molecular weight ranging from 70,000 to 80,000.

The second composition includes acrylonitrile, a halogen-containing vinyl monomer, the polar solvent, and the reaction initiator. The halogen-containing vinyl monomer of the second composition includes vinylidene chloride. Based on the total weight of vinylidene chloride and acrylonitrile of the second composition, vinylidene chloride of the second composition is in an amount ranging from 40 to 60 wt%.

The second copolymer has a weight average molecular weight ranging from 50,000 to 60,000.

The flame retardant modified acrylonitrile-based copolymer blend has a viscosity average molecular weight ranging from 50,000 to 80,000, and contains 30 to 46 wt% of vinylidene chloride monomer unit, 1 to 5 wt% of hydrophilic vinyl monomer unit, and 49 to 69 wt% of acrylonitrile monomer unit based on the total weight of the vinylidene chloride monomer unit, the hydrophilic vinyl monomer unit and the acrylonitrile monomer unit of the flame retardant modified acrylonitrile-based copolymer blend.

According to yet another aspect of this invention, there is provided a flame retardant fibrous material comprising an acrylonitrile-based copolymer fiber that is made from a composition comprising the aforementioned flame retardant modified acrylonitrile-based copolymer. The flame retardant modified acrylonitrile-based copolymer has a limiting oxygen index greater than 27%.

The method of the first preferred embodiment of this invention for preparing a flame retardant modified acrylonitrile-based copolymer comprises: (a) prepolymerizing a first composition to obtain a first prepolymer solution including a first prepolymer, the first composition including acrylonitrile, a halogen-containing vinyl monomer, at least one hydrophilic vinyl monomer, a polar solvent, and a reaction initiator; (b) prepolymerizing a second composition to obtain a second prepolymer solution including a second prepolymer, the second composition including acrylonitrile, a halogen-containing vinyl monomer, the polar solvent, and the reaction initiator; (c) mixing the first and second prepolymer solutions and subjecting a mixture of the first and second prepolymers to polymerization to obtain a flame retardant modified acrylonitrile-based copolymer solution containing a flame retardant modified acrylonitrile-based copolymer; and (d) removing a portion of the polar solvent from the flame retardant modified acrylonitrile-based copolymer solution after step (c), such that the flame retardant modified acrylonitrile-based copolymer is in an amount ranging from 20 to 35 wt% based on the total weight of the flame retardant modified acrylonitrile-based copolymer solution, thereby facilitating wet spinning of the concentrated flame retardant modified acrylonitrile-basedcopolymer solution to form a flame retardant acrylonitrile-based copolymer fiber having excellent flame retardance and strength.

The halogen-containing vinyl monomer includes vinylidene chloride. The halogen-containing vinyl monomer may further include vinyl chloride (VC), vinyl bromide (VB), vinylidene bromide (VDB), and combinations thereof.

Preferably, the hydrophilic vinyl monomer is selected from a sulfonic group-containing vinyl monomer, a carboxylic group-containing vinyl monomer and their sodium, potassium, ammonium, and quaternary ammonium salt derivatives. Examples of the sulfonic group-containing vinyl monomer include, but are not limited to, sodium methallyl sulfonate (SMAS), sodium 2-acrylamide-2-methylpropane sulfonate (SAMPS), sodium styrene sulfonate (SSS), and sodium allyl sulfonate (SAS). Examples of the carboxylic group-containing vinyl monomer include, but are not limited to, methacrylic acid, acrylic acid, and itaconic acid. The hydrophilic vinyl monomer can improve the hydrophilicity of the first composition and dyeing ability of the flame retardant modified acrylonitrile-based copolymer thus formed. More specifically, sulfonic group of the sulfonic group-containing vinyl monomer can improve the hydrophilicity of the first composition and dyeing ability of the flame retardant modified acrylonitrile-based copolymer. Fibers made from the flame retardant modified acrylonitrile-based copolymer fiber can have a relatively dense structure, thereby preventing devitrification from occurring. However, when the amount of the sulfonic group-containing vinyl monomer in the first composition is excessive, the fibers may encounter the devitrification problem.

Preferably, the polar solvent includes an organic solvent selected from dimethyl formamide, dimethyl acetamide, dimethyl sulfoxide, and combinations thereof. More preferably, the polar solvent is a mixture of the organic solvent and water, and the amount of water is less than 0.5 wt% based on the total weight of the polar solvent.

The initiator can be selected from azo compound, such as azobisisobutyronitrile (AIBN), and azo-bis dimethyl valeronitrile (AVN), and peroxy compound, such as di(2-ethylhexyl) peroxy dicarbonate, t-butyl peroxypivalate, and lauroyl peroxide.

Based on the total weight of vinylidene chloride, the hydrophilic vinyl monomer and acrylonitrile of the first composition, vinylidene chloride of the first composition is in an amount ranging from 10 to 40 wt% and the hydrophilic vinyl monomer is in an amount ranging from 5 to 50 wt%.

Preferably, the weight ratio of vinylidene chloride to acrylonitrile of the first composition ranges from 2:1 to 3.5:1.

More preferably, based on the total weight of vinylidene chloride, the hydrophilic vinyl monomer and acrylonitrile of the first composition, vinylidene chloride of the first composition is in an amount ranging from 20 to 30 wt%, and the hydrophilic vinyl monomer is in an amount ranging from 5 to 15 wt%.

Preferably, the first composition further comprises a dyeing auxiliary.

Preferably, the first composition further comprises a yellowing inhibitor for suppressing yellowing of the flame retardant modified acrylonitrile-based copolymer, and/or a recombination inhibitor for controlling the reaction rate of prepolymerization and the molecular weight of the first prepolymer. The yellowing inhibitor is selected from malic acid and its salt. The recombination inhibitor is selected from hydroquinone (HQ), 4-methoxyphenol (MEHQ), isopropanol, and mercaptan.

Preferably, the prepolymerization in step (a) is conducted under a temperature ranging from 20 to 70 °C and a pH value ranging from 5 to 13.

The first prepolymer has a weight average molecular weight preferably ranging from 30,000 to 40,000, more preferably, from 35,000 to 40,000.

The halogen-containing vinyl monomer of the second composition includes vinylidene chloride.

Based on the total weight of vinylidene chloride and acrylonitrile of the second composition, vinylidene chloride of the second composition is in an amount ranging from 40 to 60 wt%.

Preferably, based on the total weight of vinylidene chloride and acrylonitrile of the second composition, vinylidene chloride of the second composition is in an amount ranging from 45 wt% to 55 wt%.

Preferably, the second composition is substantially free of the hydrophilic vinyl monomer.

Preferably, the prepolymerization in step (b) is conducted under a temperature ranging from 20 to 70 °C and a pH value ranging from 5 to 13.

Preferably, the second prepolymer has a weight average molecular weight ranging from 30,000 to 40,000.

The flame retardant modified acrylonitrile-based copolymer has a weight average molecular weight ranging from 50,000 to 80,000, and contains 30 to 46 wt% of vinylidene chloride monomer unit, 1 to 5 wt% of hydrophilic vinyl monomer unit, and 49 to 69 wt% of acrylonitrile monomer unit based on the total weight of the vinylidene chloride monomer unit, the hydrophilic vinyl monomer unit and the acrylonitrile monomer unit of the flame retardant modified acrylonitrile-based copolymer.

Preferably, the weight ratio of the first prepolymer solution to the second prepolymer solution in step (c) ranges from 0.1:1 to 10:1.

Preferably, the flame retardant modified acrylonitrile-based copolymer contains 38 to 42 wt% of the vinylidene chloride monomer unit, 2.5 to 5 wt% of the hydrophilic vinyl monomer unit, and 55.5 to 59.5 wt% of the acrylonitrile monomer unit based on the total weight of the vinylidene chloride monomer unit, the hydrophilic vinyl monomer unit and the acrylonitrile monomer unit of the flame retardant modified acrylonitrile-based copolymer.

The amount of the vinylidene chloride of the first composition is preferably much less than that of the second composition, so that the first composition has a property of less flame retardance and the second composition has a property of greater flame retardance. It has been unexpectedly found that by formulating the first and second compositions to form the first and second prepolymers according to the method of this invention and then mixing and polymerizing the first and second prepolymers, a higher degree of copolymerization of forming the flame retardant modified acrylonitrile-based copolymer can be easily achieved and the aforesaid drawbacks associated with the prior art can be alleviated.

The flame retardant modified acrylonitrile-based copolymer of this invention is useful for production of a flame retardant fibrous material. Preferably, the flame retardant modified acrylonitrile-based copolymer has a limiting oxygen index greater than 27%.

Preferably, the flame retardant fibrous material further contains an auxiliary fiber selected from the group consisting of a natural fiber, a synthetic fiber, and the combination thereof. One example of the natural fiber is cotton. Examples of the synthetic fiber include acrylic fibers, polyester fiber, and the combination thereof.

Preferably, the flame retardant fibrous material further contains a flame retardant selected from the group consisting of $Sb_2O_5$, $Sb_2O_3$, $Al(OH)_3$, $Mg(OH)_2$, and combinations thereof.

The method of the second preferred embodiment of this invention for preparing a flame retardant modified acrylonitrile-based copolymer includes the steps of: (a) polymerizing a first composition to obtain a first copolymer solution including a first copolymer; (b) polymerizing a second composition to obtain a second copolymer solution including a second copolymer; (c) mixing the first and second copolymer solutions to obtain a flame retardant modified acrylonitrile-based copolymer solution containing a flame retardant modified acrylonitrile-based copolymer blend; and (d) removing a portion of polar solvent from the flame retardant modified acrylonitrile-based copolymer solution after step (c), such that the flame retardant modified acrylonitrile-based copolymer blend is in an amount ranging from 20 to 35 wt% based on the total weight of the flame retardant modified acrylonitrile-based copolymer solution, thereby facilitating wet spinning of the concentrated flame retardant modified acrylonitrile-based copolymer solution to form a flame retardant acrylonitrile-based copolymer fiber having excellent flame retardance and strength. The first and second compositions of the second preferred embodiment are the same as those of the first preferred embodiment, respectively. The first copolymer preferably has a weight average molecular weight ranging from 70,000 to 80,000. The second copolymer preferably has a weight average molecular weight ranging from 50,000 to 60,000. The flame retardant modified acrylonitrile-based copolymer blend preferably has a viscosity average molecular weight ranging from 50,000 to 80,000.

By formulating the first and second compositions according to the method of this invention, a high degree of polymerization of forming the first copolymer can be easily achieved, which, in turn, facilitates the formation of a high weight average molecular weight of the flame retardant modified acrylonitrile-based copolymer blend by blending with the second copolymer, thereby overcoming the aforesaid drawbacks associated with the prior art.

The merits of the method for preparing the flame retardant modified acrylonitrile-based copolymer and the copolymer blend of this invention will become apparent with reference to the following Examples and Comparative Examples. The method of this invention should not be restricted to the following Examples.

< Examples >

<Example 1 (EX1)>

**Preparation of the first prepolymer solution**

In the preparation of the first prepolymer solution of Example 1, acrylonitrile(AN), vinylidene chloride(VDC) serving as the halogen-containing vinyl monomer, sodium methallyl sulfonate(SMAS) serving as the hydrophilic vinyl monomer, and azo-bis dimethyl valeronitrile(AVN) serving as the initiator were dissolved in dimethyl formamide to form the first composition. The first composition contained 460 ppm AVN. The weight ratio of AN:VDC:SMAS was 65:20:15, and the total weight of AN, VDC, and SMAS was 35 wt% based on the total weight of the first composition.
The first composition was prepolymerized under pH 7.5 and 45°C for 17 hours to obtain a first prepolymer solution containing a first prepolymer which had a weight average molecular weight ranging from 35,000 to 40,000.

**Preparation of the second prepolymer solution**

In the preparation of the second prepolymer solution of Example 1, AN, VDC, and AVN were dissolved in dimethyl formamide to form the second composition. The second composition contained 800ppm AVN. The weight ratio of AN:VDC was 55:45, and the total weight of AN and VDC was 50 wt% based on the total weight of the second composition.
The second composition was prepolymerized under pH 7.5 and 53°C for 16 hours to obtain a second prepolymer solution including a second prepolymer which had a weight average molecular weight ranging from 35,000 to 40,000.

**Preparation of the flame retardant modified acrylonitrile-based copolymer**

The first and second propolymer solutions were mixed in a weight ratio of 1:3 to form a mixture. 800 ppm of AVN was added into the mixture. The mixture was polymerized under 50°C for 10 hours to obtain a flame retardant modified acrylonitrile-based copolymer solution including a flame retardant modified acrylonitrile-based copolymer. The modified acrylonitrile-based copolymer contained 56.4wt% of AN monomer unit, 39.9 wt% of VDC monomer unit, and 3.5 wt% of SMAS monomer unit, and had a weight average molecular weight of 61,000.

**Formation of the flame retardant modified acrylonitrile-based copolymer fiber**

The flame retardant modified acrylonitrile-based copolymer solution was fed into a film evaporator to remove a portion of the polar solvent, such that the concentrated flame retardant modified acrylonitrile-based copolymer solution had a solid content of 26 wt% (solid content = the content of flame retardant modified acrylonitrile-based copolymer) based on the total weight of the flame retardant modified acrylonitrile-based copolymer solution.
The concentrated flame retardant modified acrylonitrile-based copolymer solution was used as a spinning dope solution for wet spinning, in which the spinning dope solution was extruded, followed by being stretched to three times its original dimension, washed with water, dried, and being further stretched to two times of the last dimension under 100°C so as to obtain a flame retardant modified acrylonitrile-based copolymer fiber.
The first and second compositions and the weight average molecular weight of the modified acrylonitrile-based copolymer of Example 1 are listed in Table 1.

<Examples 2 and 3 (EX2 and EX3)>

The procedures and conditions in preparing the flame retardant modified acrylonitrile-based copolymer fibers of Examples 2 and 3 were similar to those of Example 1 except for the first composition and the prepolymerization time of the first composition.
The hydrophilic vinyl monomers of the first composition of Examples 2 and 3 were sodium 2-acrylamide-2-methylpropane sulfonate(SAMPS) and sodium styrene sulfonate (SSS), respectively. The prepolymerization time of the first composition of Examples 2 and 3 was 15 hours.
The first and second compositions and the weight average molecular weights of the modified acrylonitrile-based copolymers of Examples 2 and 3 are listed in Table 1.

<Example 4 (EX4)>

The procedures and conditions in preparing the flame retardant modified acrylonitrile-based copolymer fiber of Example 4 were similar to those of Example 1 except that the hydrophilic vinyl monomer of the first composition was SAMPS and the weight ratio of AN:VDC: SAMPS of the first composition was 58:27:15, and that the prepolymerization time of the first composition was 10 hours and the prepolymerization time of the second composition was 10 hours. The modified acrylonitrile-based copolymer of Example 4 contained 55.5 wt% of AN monomer unit, 41.5 wt% of VDC monomer unit, and 3.0 wt% of SAMPS monomer unit, had a weight average molecular weight of 62,000, and had a solid content of 28 wt% based on the total weight of the flame retardant modified acrylonitrile-based copolymer solution.

The first and second compositions and the weight average molecular weight of the modified acrylonitrile-based copolymer of Example 4 are listed in Table 1.

<Example 5 (EX5)>

The procedures and conditions in preparing the flame retardant modified acrylonitrile-based copolymer fibers of Example 5 were similar to those of Example 4 except for the first composition and the prepolymerization time of the first composition.

The weight ratio of AN:VDC:SAMPS of the first composition was 70:20:10. The prepolymerization time of the first composition was 15 hours. The modified acrylonitrile-based copolymer of Example 5 contained 57.2 wt% of AN monomer unit, 40.0 wt% of VDC monomer unit and 2.8 wt% of SAMPS monomer unit, and had a weight average molecular weight of 61,000.

The first and second compositions and the weight average molecular weight of the modified acrylonitrile-based copolymer of Example 5 are listed in Table 1.

<Example 6 (EX6)>

**Preparation of the first copolymer solution**

In the preparation of the first copolymer solution of Example 6, AN, VDC, SAMPS, and AVN were dissolved in dimethyl formamide to form the first composition. The first composition contained 600 ppm AVN. The weight ratio of AN: VDC: SAMPS was 65: 27 : 8, and the total weight of AN, VDC, and SMAS was 40 wt% based on the total weight of the first composition.

The first composition was polymerized under pH 7.5 and 53°C for 14 hours to obtain a first copolymer solution including a first copolymer having a weight average molecular weight ranging from 70,000 to 80,000.

**Preparation of the second copolymer solution**

In the preparation of the second copolymer solution of Example 6, AN, VDC, and AVN were dissolved in dimethyl formamide to form the second composition. The second composition contained 800 ppm AVN. The weight ratio of AN:VDC was 55:45, and the total weight of AN and VDC was 50 wt% based on the total weight of the second composition.

The second composition was polymerized under pH 7.5 and 53°C for 16 hours to obtain a second copolymer solution including a second copolymer having a weight average molecular weight ranging from 50,000 to 60,000.

**Preparation of the flame retardant modified acrylonitrile-based copolymer blend**

The first and second copolymer solutions were mixed in a weight ratio of 1:3 to obtain a flame retardant modified acrylonitrile-based copolymer solution including a flame retardant modified acrylonitrile-based copolymer blend. The modified acrylonitrile-based copolymer blend contained 56.3 wt% of AN monomer unit, 40.7 wt% of VDC monomer unit, and 3.0 wt% of SAMPS monomer unit, and had a viscosity average molecular weight (Mw) of 58,000, which was calculated according to the Mark-Houwink relationship:

$$[\eta] = K[Mw]^a$$

where K and a are parameters dependent on the polymer and the solvent used for dissolving the polymer and where $\eta$ is the intrinsic viscosity.

**Formation of the flame retardant modified acrylonitrile-based copolymer fiber**

The procedures and conditions of wet spinning of the flame retardant modified acrylonitrile-based copolymer solution of Example 6 were similar to those of Example 1 except that the solid content of the flame retardant modified acrylonitrile-based copolymer solution was 28 wt% based on the total weight of the flame retardant modified acrylonitrile-based copolymer solution.

The first and second compositions and the weight or viscosity average molecular weight of the modified acrylonitrile-based copolymer blend of Example 6 are listed in Table 1.

<Examples 7 and 8 (EX7 and EX8)>

The procedures and conditions in preparing the flame retardant modified acrylonitrile-based copolymer fibers of Examples 7 and 8 were similar to those of example 6 except for the first composition.

The weight ratio of AN:VDC:SAMPS of the first composition of Example 7 was 58:27:15. The modified acrylonitrile-based copolymer blend of Example 7 contained 56.2 wt% of AN monomer unit, 40.1 wt% of VDC monomer unit, and 3.7 wt% of SAMPS monomer unit, and had a viscosity-average molecular weight of 59,000.

The weight ratio of AN:VDC:SAMPS of the first composition of Example 8 was 63:25:12. The modified acrylonitrile-based copolymer blend of Example 8 contained 55.6 wt% of AN monomer unit, 40.1 wt% of VDC monomer unit, and 4.3 wt% of SAMPS monomer unit, and had a viscosity average molecular weight of 61, 000 .

The first and second compositions and the weight or viscosity average molecular weight of the modified acrylonitrile-based copolymer of Examples 7 and 8 are listed in Table 1.

<Examples 9 and 10 (EX9 and EX10)>

The procedures and conditions in preparing the flame retardant modified acrylonitrile-based copolymer fibers of Examples 9 and 10 were similar to those of Example 6 except for the first composition and the weight ratios of the first and second copolymer solutions.

The weight ratio of AN:VDC:SAMPS of the first composition of each of Examples 9 and 10 was 65:25:10. The weight ratios of the first and second copolymer solutions of examples 9 and 10 were 1:2.5 and 1:2, respectively.

The flame retardant modified acrylonitrile-based copolymer blend of Example 9 contained 56.1 wt% of AN monomer unit, 39.5 wt% of VDC monomer unit, and 4.4 wt% of SAMPS monomer unit, and had a viscosity average molecular weight of 58,000. The flame retardant modified acrylonitrile-based copolymer blend of Example 10 contained 56.8 wt% of AN monomer unit, 38.4 wt% of VDC monomer unit, and 4.8 wt% of SAMPS monomer unit, and had a viscosity average molecular weight of 58,000.

The compositions and the weight or viscosity average molecular weight of the modified acrylonitrile-based copolymer blends of Examples 9 and 10 are listed in Table 1.

<Comparative Examples 1 and 2(CE1 and CE2)>

The procedures and conditions in preparing the flame retardant modified acrylonitrile-based copolymer fibers of Comparative Example 1 were similar to those of Example 2 except that the prepolymerization time of the first composition was 10 hours, and the weight ratio of AN:VDC of the second composition was 40:60. The flame retardant modified acrylonitrile-based copolymer of Comparative Example 1 contained 44.7 wt% of AN monomer unit, 51.2 wt% of VDC monomer unit, and 4.1 wt% of SAMPS monomer unit, and had a weight average molecular weight of 58,000.

The procedures and conditions in preparing the flame retardant modified acrylonitrile-based copolymer fiber of Comparative Example 2 were similar to those of Comparative Example 1 except that the weight ratio of AN:VDC of the second composition was 30:70. The flame retardant modified acrylonitrile-based copolymer of Comparative Example 2 contained 36.8 wt% of AN monomer unit, 59.1 wt% of VDC monomer unit, and 4.1 wt% of SAMPS monomer unit, and had a weight average molecular weight of 57,000.

The compositions and the weight average molecular weights of the modified acrylonitriles-based copolymers of Comparative Examples 1 and 2 are listed in Table 1.

<Comparative Examples 3 to 5(CE3 to CE5)>

The procedures and conditions in preparing the flame retardant modified acrylonitrile-based copolymer fibers of Comparative Examples 3 to 5 were similar to those of Example 6 except for the weight ratio of the first and second compositions.

The weight ratio of AN:VDC:SAMPS of the first composition of Comparative Example 3 was 60:20:20. The flame retardant modified acrylonitrile-based copolymer blend of Comparative Example 2 contained 56.2 wt% of AN monomer unit, 38.2 wt% of VDC monomer unit, and 5.6 wt% of SAMPS monomer unit, and had a viscosity average molecular weight of 61,000.

The weight ratio of AN:VDC:SAMPS of the first composition of Comparative Example 4 was 80:10:10. The weight ratio of AN:VDC of the second composition of Comparative Example 4 was 50:50. The flame retardant modified acrylonitrile-based copolymer blend of Comparative Example 4 contained 55.4 wt% of AN monomer unit, 41.0 wt% of VDC monomer unit, and 3.6 wt% of SAMPS monomer unit, and had a viscosity average molecular weight of 60,000.

The weight ratio of AN:VDC:SAMPS of the first composition of Comparative Example 5 was 90:0:10. The weight ratio of AN:VDC of the second composition of Comparative Example 5 was 50:50. The flame retardant modified acrylonitrile-based copolymer blend of Comparative Example 5 contained 57.5 wt% of AN monomer unit, 38.8 wt% of VDC monomer unit, and 3.7 wt% of SAMPS monomer unit, and had a viscosity average molecular weight of 60,000.

Each of the spinning dope solutions of Comparative Examples 3, 4, and 5 was stretched to five times of its original dimension after extrusion.

The first and second compositions and the viscosity average molecular weights of the modified acrylonitrile-based copolymer blends of Comparative Examples 3 to 5 are listed in Table 1.

Table 1

|  | 1st composition | 2nd composition | flame retardant modified acrylonitrile-based copolymer | | |
|---|---|---|---|---|---|
|  | AN/VDC/SAMPS (%) | AN/VDC | Weight ratio of 1st : 2nd copolymer solutions | Mw or Mv | AN/VDC/SAMPS (%) |
| EX1 | 65/20/15 (SMAS) | 55/45 | 1:3 | 61000 | 56.4/39.9/3.5 (SMAS) |
| EX2 | 65/20/15 | 55/45 | 1:3 | 65000 | 56.1/40.1/3.8 |
| EX3 | 65/20/15 (SSS) | 55/45 | 1:3 | 66000 | 55.5/41.2/3.1 (SSS) |
| EX4 | 58/27/15 | 55/45 | 1:3 | 62000 | 55.5/41.5/3.0 |
| EX5 | 70/20/10 | 55/45 | 1:3 | 61000 | 57.2/40.0/2.8 |
| EX6 | 65/27/8 | 55/45 | 1:3 | 58000 | 56.3/40.7/3.0 |
| EX7 | 65/20/15 | 55/45 | 1:3 | 59000 | 56.2/40.1/3.7 |
| EX8 | 63/25/12 | 55/45 | 1:3 | 61000 | 55.6/40.1/4.3 |
| EX9 | 65/20/15 | 55/45 | 1:2.5 | 58000 | 56.1/39.5/4.4 |
| EX10 | 65/20/15 | 55/45 | 1:2 | 58000 | 56.8/38.4/4.8 |
| CE1 | 65/20/15 | 40/60 | 1:3 | 58000 | 44.7/51.2/4.1 |
| CE2 | 65/20/15 | 30/70 | 1:3 | 57000 | 36.8/59.1/4.1 |
| CE3 | 60/20/20 | 55/45 | 1:3 | 61000 | 56.2/38.2/5.6 |
| CE4 | 80/10/10 | 50/50 | 1:3 | 60000 | 55.4/41.0/3.6 |
| CE5 | 90/0/10 | 50/50 | 1:3 | 60000 | 57.5/38.8/3.7 |

The physical properties of the flame retardant modified acrylonitrile-based copolymer fibers of the aforesaid examples and comparative examples were measured. The measured results are listed in Table 2.

## Limit Oxygen Index (LOI) Measurement

Limiting oxygen index is a measure of the flammability of a material. The LOI of each of the aforesaid examples and comparative examples was measured as follows.

0.35g of the flame retardant modified acrylonitrile-based copolymer was rolled into a string for use as a sample. The sample was placed in a combustion chamber (ON-2M' Suga Test Instruments Co. Ltd.), and was ignited in the presence of a gas mixture of oxygen and nitrogen in the combustion chamber. The concentration of the oxygen in the combustion chamber was measured and recorded when the flame of the sample went out. The LOI is calculated from the following equation:

$$LOI(\%) = concentration\ of\ O_2\ when\ the\ flame\ went\ out /$$

$$(initial\ concentration\ of\ N_2 + initial\ concentration$$

$$of\ O_2).$$

## Tensile Strength and Elongation Measurement

The tensile strength and elongation of the modified acrylonitrile-based copolymer fiber (a single fiber having a length of 20mm) of each of the aforesaid examples and comparative examples were measured using a strength elongation measuring device (TEXCHNO FAVIMAT+).

## Saturated Dyeability Measurement

0.6g malachite green was mixed with 0.5ml glacial acetic acid. The mixture was diluted with water to one liter so as to obtain a dye primary solution having a malachite green concentration of 0.6 (g-dye/l). 150g of the dye primary solution was added into a flask. A 3g specimen was placed in the dye primary solution (i.e., the on weight of fiber (O.W.F) of the malachite green was 3% OWF, (which is calculated by the following equation: $O.W.F\% = (0.6/1000)*150/3*100$) in the flask for dyeing at 96°C for 2 hours, followed by heating to 100 °C for 20 minutes. The dye primary solution was then cooled.

The used dye primary solution (after the dyeing) and the initial dye primary solution (before the dyeing) were diluted, and the wavelength absorbance thereof were measured at 610nm wavelength using a spectrophotometer (Hitachi U-3010).

Saturated dyeability is calculated using the following equation:

$$Saturation\ value\ (R) = [(B-A)/B]*3\ O.W.F.\%,$$

wherein A is the absorbance of the used dye primary solution, and B is the absorbance of the initial dye primary solution.

## Whiteness Measurement

The whiteness of a sample of the modified acrylonitrile-based copolymer fiber (the sample having a weight of 1.2g) was tested using a colorimeter (Tokyo Denshoku TC180.0-MK II).

## Spinnability Measurement

The spinnability of the modified acrylonitrile-based copolymer fiber was analyzed by stretching the same to a predetermined length, followed by observing any hole formed therein using an optical microscope (Nikon MM-40) and by measuring the tensile strength and elongation thereof. The spinnability is classified into 5 classes based on the number of factors being met. The factors are set such that the elongation is required to be greater than 32%, the tensile strength is required to be greater than 3.2g/d, and the number of the hole(s) is zero. The spinnability classes are as follows.

Class 1: none of the factors is met and the fiber is unable to be spun. Spinnability was very poor.
Class 2: at least two of the factors are not met. Spinnability was poor.
Class 3: only one of the factors is not met. Spinnability was normal.

Class 4: only one of the factors is slightly not met. Spinnability was good.
Class 5: all of the factors are met. Spinnability was very good.

**Tactile feeling Test**

Tactile feeling is classified into 5 classes which are as follows.

Class 1: The fiber is relatively rough. Tactile feeling was very poor.
Class 2: The fiber is slightly rough. Tactile feeling was poor.
Class 3: Tactile feeling was normal.
Class 4: The fiber is soft and smooth. Tactile feeling was good.
Class 5: The fiber is soft and smooth. Tactile feeling was excellent.

Table 2

| | modified acrylonitrile-based copolymer fiber | | | | | | |
|---|---|---|---|---|---|---|---|
| | LOI (%) | Elongation (%) | Strength (g/denier) | Saturated Fastness (%) | Whiteness | Spinnability | Tactile Impression |
| EX1 | 28 | 35 | 3.2 | 1.8 | 65 | 3 | 4 |
| EX2 | 28 | 37 | 3.5 | 2.2 | 64 | 5 | 5 |
| EX3 | 28.5 | 38 | 3.4 | 1.7 | 64 | 4 | 4 |
| EX4 | 28.5 | 32 | 3.1 | 1.5 | 62 | 5 | 4 |
| EX5 | 28 | 31 | 2.9 | 1.5 | 62 | 4 | 5 |
| EX6 | 28 | 34 | 3.1 | 1.4 | 64 | 4 | 4 |
| EX7 | 28 | 31 | 3.2 | 1.8 | 64 | 4 | 4 |
| EX8 | 28 | 30 | 3 | 2.2 | 64 | 4 | 4 |
| EX9 | 28 | 31 | 3.2 | 2.1 | 64 | 4 | 4 |
| EX10 | 27.5 | 30 | 3 | 2.4 | 65 | 4 | 4 |
| CE1 | 29 | 30 | 3.2 | – | 62 | 3 | 2 |
| CE2 | 30 | 31 | 3.1 | – | 61 | 3 | 1 |
| CE3 | 28 | 22 | 2.4 | – | 56 | 2 | 2 |
| CE4 | 28 | 24 | 2.6 | – | 55 | 2 | 2 |
| CE5 | 27 | 20 | 2.1 | – | 56 | 2 | 2 |

<Examples 11 to 14 (EX11 to EX14)>

The procedures and conditions in preparing the flame retardant modified acrylonitrile-based copolymer fibers of Examples 11 to 14 were similar to Example 4 except for the compositions of the spinning dope solutions.
Before the spinning, each of the spinning dope solution of Examples 11 to 14 further contained 10wt% $Sb_2O_5$ serving as a flame retardant based on the total weight of the spinning dope solution.

The flame retardant modified acrylonitrile-based copolymer fiber of each of Examples 12 to 14 was blended with cotton to obtain a flame retardant fibrous material. The contents of cotton of the flame retardant fibrous materials of Examples 11 to 14 were 30wt%, 50wt% and 70wt%, respectively.

The compositions of the spinning dope solutions and limit oxygen indices of the flame retardant fibrous materials of Examples 11 to 14 are listed in Table 3.

<Examples 15 and 16 (EX15 and EX16)>

The procedures and conditions in preparing the flame retardant modified acrylonitrile-based copolymer fibers of Examples 15 and 16 were similar to Example 4 except for the composition of the spinning dope solution.

Before the spinning, the spinning dope solutions of Examples 15 and 16 further contained 5wt% and 8wt% $Sb_2O_5$ based on the total weight of the spinning dope solutions, respectively.

The compositions of the spinning dope solutions and limit oxygen indices of the flame retardant modified acrylonitrile-based copolymer fibers of Examples 15 to 16 are listed in Table 3.

Table 3

| | Content of $Sb_2O_5$ (wt %) | Content of cotton (wt%) | LOI |
|---|---|---|---|
| EX11 | 10 | 0 | 34 |
| EX12 | 10 | 30 | 34.5 |
| EX13 | 10 | 50 | 33.5 |
| EX14 | 10 | 70 | 31.0 |
| EX15 | 5 | 0 | 32.0 |
| EX16 | 8 | 0 | 33.0 |

<Examples 17 to 19 (EX17 to EX19)>

The procedures and conditions in preparing the flame retardant modified acrylonitrile-based copolymer fibers of Examples 17 to 19 were similar to Example 2 except for the compositions of the spinning dope solution.

The spinning dope solution of Example 17 further contained 8wt% $Sb_2O_5$ and 3 wt% $Al(OH)_3$ based on the total weight of the spinning dope solution.

The spinning dope solution of Example 18 further contained 8wt% $Sb_2O_5$ and 6 wt% $Al(OH)_3$ based on the total weight of the spinning dope solution.

The spinning dope solution of Example 19 further contained 10wt% $Sb_2O_5$ and 3 wt% $Al(OH)_3$ based on the total weight of the spinning dope solution.

The flame retardant modified acrylonitrile-based copolymer fibers of Examples 17 and 19 were blended with 50 wt% and 70 wt% cotton, respectively, so as to obtain the flame retardant fibrous materials.

The compositions of the spinning dope solutions and the limit oxygen indexes of the flame retardant fibrous materials of Examples 17 to 19 are listed in Table 4.

Table 4

| | Content of $Sb_2O_5$ (wt%) | Content of $Al(OH)_3$ (wt%) | LOI | | |
|---|---|---|---|---|---|
| | | | 0 wt% cotton | 50 wt% cotton | 70wt% cotton |
| EX17 | 8 | 3 | 33.5 | 33 | 29 |
| EX18 | 8 | 6 | 34.5 | 33 | 30.5 |
| EX19 | 10 | 3 | 34.5 | 34 | 31 |

In conclusion, by formulating the first and second compositions to form first and second prepolymers or first and second copolymers, respectively, and then polymerizing the first and second prepolymers or blending the first and second copolymers according to the method of this invention, the aforesaid drawbacks associated with the prior art can be alleviated.

**Claims**

1. A method for preparing a flame retardant modified acrylonitrile-based copolymer, comprising:

   (a) prepolymerizing a first composition to obtain a first prepolymer solution including a first prepolymer;
   (b) prepolymerizing a second composition to obtain a second prepolymer solution including a second prepolymer; and
   (c) mixing the first and second prepolymer solutions and subjecting a mixture of the first and second prepolymers to polymerization to obtain a flame retardant modified acrylonitrile-based copolymer solution containing a flame retardant modified acrylonitrile-based copolymer;

   the method being **characterized in that**:

   the first composition includes acrylonitrile, a halogen-containing vinyl monomer, at least one hydrophilic vinyl monomer, a polar solvent, and a reaction initiator, the halogen-containing vinyl monomer including vinylidene chloride;
   based on the total weight of vinylidene chloride, the hydrophilic vinyl monomer and acrylonitrile of the first composition, vinylidene chloride of the first composition is in an amount ranging from 10 to 40 wt% and the hydrophilic vinyl monomer is in an amount ranging from 5 to 50 wt%;
   the first prepolymer has a weight average molecular weight ranging from 30,000 to 40,000;
   the second composition includes acrylonitrile, a halogen-containing vinyl monomer, the polar solvent, and the reaction initiator, the halogen-containing vinyl monomer of the second composition including vinylidene chloride;
   based on the total weight of vinylidene chloride and acrylonitrile of the second composition, vinylidene chloride of the second composition is in an amount ranging from 40 to 60 wt%; and
   the flame retardant modified acrylonitrile-based copolymer has a weight average molecular weight ranging from 50,000 to 80,000 and contains 30 to 46 wt% of vinylidene chloride monomer unit, 1 to 5 wt% of hydrophilic vinyl monomer unit, and 49 to 69 wt% of acrylonitrile monomer unit based on the total weight of the vinylidene chloride monomer unit, the hydrophilic vinyl monomer unit and the acrylonitrile monomer unit of the flame retardant modified acrylonitrile-based copolymer.

2. The method of claim 1, **characterized in that** the prepolymerization in steps (a) and (b) is conducted under a temperature ranging from 20 to 70°C.

3. The method of claim 1 or claim 2, **characterized in that** the weight ratio of the first prepolymer solution to the second prepolymer solution in step (c) ranges from 0.1:1 to 10:1.

4. The method of any preceding claim, **characterized in that**: (i) the hydrophilic vinyl monomer is selected from a sulfonic group-containing vinyl monomer and a carboxylic group-containing vinyl monomer, and/or (ii) the first composition further includes a yellowing inhibitor.

5. The method of any preceding claim, further **characterized by**:

   (d) removing a portion of the polar solvent from the flame retardant modified acrylonitrile-based copolymer solution after step (c), such that the flame retardant modified acrylonitrile-based copolymer is in an amount ranging from 20 to 35 wt% based on the total weight of the flame retardant modified acrylonitrile-based copolymer solution.

6. The method of any preceding claim, **characterized in that** the weight ratio of vinylidene chloride to acrylonitrile of the first composition ranges from 2:1 to 3.5:1, and the second prepolymer has a weight average molecular weight ranging from 30,000 to 40,000.

7. The method of any preceding claim, **characterized in that**:

   based on the total weight of vinylidene chloride, the hydrophilic vinyl monomer and acrylonitrile of the first composition, vinylidene chloride of the first composition is in an amount ranging from 20 to 30 wt%, the hydrophilic vinyl monomer is in an amount ranging from 5 to 15 wt%, and the weight ratio of vinylidene chloride to acrylonitrile of the first composition ranges from 2:1 to 3.5:1;
   based on the total weight of vinylidene chloride and acrylonitrile of the second composition, vinylidene chloride of the second composition is in an amount ranging from 45 wt% to 55 wt%; and

the flame retardant modified acrylonitrile-based copolymer contains 38 to 42 wt% of the vinylidene chloride monomer unit, 2.5 to 5 wt% of the hydrophilic vinyl monomer unit, and 55.5 to 59.5 wt% of the acrylonitrile monomer unit based on the total weight of the vinylidene chloride monomer unit, the hydrophilic vinyl monomer unit and the acrylonitrile monomer unit of the flame retardant modified polyacrylonitrile-based copolymer.

8. Use of acrylonitrile for preparing a flame retardant modified acrylonitrile-based copolymer, comprising:

(a) polymerizing a first composition to obtain a first copolymer solution including a first copolymer;
(b) polymerizing a second composition to obtain a second copolymer solution including a second copolymer; and
(c) mixing the first and second copolymer solutions to obtain a flame retardant modified acrylonitrile-based copolymer solution containing a flame retardant modified acrylonitrile-based copolymer blend;

the use being **characterized in that**:

the first composition includes acrylonitrile, a halogen-containing vinyl monomer, at least one hydrophilic vinyl monomer, a polar solvent, and a reaction initiator, the halogen-containing vinyl monomer including vinylidene chloride;
based on the total weight of vinylidene chloride, the hydrophilic vinyl monomer and acrylonitrile of the first composition, vinylidene chloride of the first composition is in an amount ranging from 10 to 40 wt% and the hydrophilic vinyl monomer is in an amount ranging from 5 to 50 wt%;
the first copolymer has a weight average molecular weight ranging from 70,000 to 80,000;
the second composition includes acrylonitrile, a halogen-containing vinyl monomer, the polar solvent, and the reaction initiator, the halogen-containing vinyl monomer of the second composition including vinylidene chloride;
based on the total weight of vinylidene chloride and acrylonitrile of the second composition, vinylidene chloride of the second composition is in an amount ranging from 40 to 60 wt%;
the second copolymer has a weight average molecular weight ranging from 50,000 to 60,000; and
the flame retardant modified acrylonitrile-based copolymer blend has a viscosity-average molecular weight ranging from 50,000 to 80,000, and contains 30 to 46 wt% of vinylidene chloride monomer unit, 1 to 5 wt% of hydrophilic vinyl monomer unit, and 49 to 69 wt% of acrylonitrile monomer unit based on the total weight of the vinylidene chloride monomer unit, the hydrophilic vinyl monomer unit and the acrylonitrile monomer unit of the flame retardant modified acrylonitrile-based copolymer blend.

9. The use of claim 8, **characterized in that** the polymerization in steps (a) and (b) is conducted under a temperature ranging from 20 to 70°C.

10. The use of claim 8 or claim 9, **characterized in that** the weight ratio of the first copolymer solution to the second copolymer solution in step (c) ranges from 0.1:1 to 10:1.

11. The use of any one of claims 8 to 10, **characterized in that**: (i) the hydrophilic vinyl monomer is selected from a sulfonic group-containing vinyl monomer and a carboxylic group-containing vinyl monomer; and/or (ii) the first composition further includes a yellowing inhibitor.

12. The use of any one of claims 8 to 11, further **characterized by**:

(d) removing a portion of the polar solvent from the flame retardant modified acrylonitrile-based copolymer solution after step (c), such that the flame retardant modified acrylonitrile-based copolymer blend is in an amount ranging from 20 to 35 wt% based on the total weight of the flame retardant modified acrylonitrile-based copolymer solution.

13. The use of any one of claims 8 to 12, **characterized in that** the second composition is substantially free of the hydrophilic vinyl monomer.

14. A flame retardant fibrous material **characterized by** an acrylonitrile-based copolymer fiber that is made from a composition including a flame retardant modified acrylonitrile-based copolymer prepared according to the method as claimed in any one of Claims 1 to 7, said flame retardant modified acrylonitrile-based copolymer having a limiting oxygen index greater than 27%.

**15.** The flame retardant fibrous material of claim 14, further **characterized by**: (i) an auxiliary fiber selected from the group consisting of a natural fiber, a synthetic fiber, and the combination thereof, and/or (ii)a flame retardant selected from the group consisting of $Sb_2O_5$, $Sb_2O_3$, $Al(OH)_3$, $Mg(OH)_2$, and combinations thereof.

**Patentansprüche**

**1.** Verfahren zur Herstellung eines flammhemmenden, modifizierten, auf Acrylnitril basierten Copolymers, das Folgendes umfasst:

(a) Vorpolymerisieren einer ersten Zusammensetzung, um eine erste Vorpolymerlösung zu erhalten, die ein erstes Vorpolymer einschließt;
(b) Vorpolymerisieren einer zweiten Zusammensetzung, um eine zweite Vorpolymerlösung zu erhalten, die ein zweites Vorpolymer einschließt; und
(c) Mischen der ersten und zweiten Vorpolymerlösung und Polymerisieren einer Mischung aus dem ersten und zweiten Vorpolymer, um eine flammhemmende, modifizierte, auf Acrylnitril basierte Copolymerlösung zu erhalten, die ein flammhemmendes, modifiziertes, auf Acrylnitril basiertes Copolymer enthält;

wobei das Verfahren **dadurch gekennzeichnet ist, dass**:

die erste Zusammensetzung Folgendes einschließt: Acrylnitril, ein halogenhaltiges Vinylmonomer, mindestens ein hydrophiles Vinylmonomer, ein polares Lösungsmittel und einen Reaktionsstarter, wobei das halogenhaltige Vinylmonomer Vinylidenchlorid einschließt;
bezogen auf das Gesamtgewicht von Vinylidenchlorid, des hydrophilen Vinylmonomers und von Acrylnitril der ersten Zusammensetzung, das Vinylidenchlorid der ersten Zusammensetzung in einer Menge im Bereich von 10 bis 40 Gew.-% vorliegt und das hydrophile Vinylmonomer in einer Menge im Bereich von 5 bis 50 Gew.-% vorliegt;
das erste Vorpolymer ein gewichtsmittleres Molekulargewicht im Bereich von 30 000 bis 40 000 aufweist;
die zweite Zusammensetzung Folgendes einschließt: Acrylnitril, ein halogenhaltiges Vinylmonomer, das polare Lösungsmittel und den Reaktionsstarter, wobei das halogenhaltige Vinylmonomer der zweiten Zusammensetzung Vinylidenchlorid einschließt;
bezogen auf das Gesamtgewicht von Vinylidenchlorid und Acrylnitril der zweiten Zusammensetzung, Vinylidenchlorid der zweiten Zusammensetzung in einer Menge im Bereich von 40 bis 60 Gew.-% vorliegt; und
das flammhemmende, modifizierte, auf Acrylnitril basierte Copolymer ein gewichtsmittleres Molekulargewicht im Bereich von 50 000 bis 80 000 aufweist und Folgendes enthält: 30 bis 46 Gew.-% an Vinylidenchloridmonomereinheiten, 1 bis 5 Gew.-% an hydrophilen Vinylmonomereinheiten und 49 bis 69 Gew.-% an Acrylnitrilmonomereinheiten, bezogen auf das Gesamtgewicht der Vinylidenchloridmonomereinheiten, der hydrophilen Vinylmonomereinheiten und der Acrylnitrilmonomereinheiten des flammhemmenden, modifizierten, auf Acrylnitril basierten Copolymers.

**2.** Verfahren nach Anspruch 1, **dadurch gekennzeichnet, dass** die Vorpolymerisation in den Schritten (a) und (b) bei einer Temperatur im Bereich von 20 bis 70°C durchgeführt wird.

**3.** Verfahren nach Anspruch 1 oder Anspruch 2, **dadurch gekennzeichnet, dass** das Gewichtsverhältnis der ersten Vorpolymerlösung zu der zweiten Vorpolymerlösung im Schritt (c) im Bereich von 0,1 : 1 bis 10 : 1 liegt.

**4.** Verfahren nach einem vorstehenden Anspruch, **dadurch gekennzeichnet, dass**: (i) das hydrophile Vinylmonomer aus einem Sulfongruppe-haltigen Vinylmonomer und einem Carboxylgruppe-haltigen Vinylmonomer ausgewählt ist und/oder (ii) die erste Zusammensetzung weiter einen Vergilbungsinhibitor einschließt.

**5.** Verfahren nach einem vorstehenden Anspruch, weiter **gekennzeichnet durch**:

(d) Entfernen eines Teils des polaren Lösungsmittels aus der flammhemmenden, modifizierten, auf Acrylnitril basierten Copolymerlösung nach Schritt (c), sodass das flammhemmende, modifizierte, auf Acrylnitril basierte Copolymer in einer Menge im Bereich von 20 bis 35 Gew.-%, bezogen auf das Gesamtgewicht der flammhemmenden, modifizierten, auf Acrylnitril basierten Copolymerlösung, vorliegt.

**6.** Verfahren nach einem vorstehenden Anspruch, **dadurch gekennzeichnet, dass** das Gewichtsverhältnis von Vinylidenchlorid zu Acrylnitril der ersten Zusammensetzung im Bereich von 2 : 1 bis 3,5 : 1 liegt und das zweite Vorpolymer ein gewichtsmittleres Molekulargewicht im Bereich von 30 000 bis 40 000 aufweist.

7. Verfahren nach einem vorstehenden Anspruch, **dadurch gekennzeichnet, dass**:

bezogen auf das Gesamtgewicht von Vinylidenchlorid, des hydrophilen Vinylmonomers und von Acrylnitril der ersten Zusammensetzung, das Vinylidenchlorid der ersten Zusammensetzung in einer Menge im Bereich von 20 bis 30 Gew.-% vorliegt, das hydrophile Vinylmonomer in einer Menge im Bereich von 5 bis 15 Gew.-% vorliegt und das Gewichtsverhältnis von Vinylidenchlorid zu Acrylnitril der ersten Zusammensetzung im Bereich von 2 : 1 bis 3,5 : 1 liegt;
bezogen auf das Gesamtgewicht von Vinylidenchlorid und Acrylnitril der zweiten Zusammensetzung, Vinylidenchlorid der zweiten Zusammensetzung in einer Menge im Bereich von 45 Gew.-% bis 55 Gew.-% vorliegt; und das flammhemmende, modifizierte, auf Acrylnitril basierte Copolymer Folgendes enthält: 38 bis 42 Gew.-% der Vinylidenchloridmonomereinheit, 2,5 bis 5 Gew.-% der hydrophilen Vinylmonomereinheit und 55,5 bis 59,5 Gew.-% der Acrylnitrilmonomereinheit, bezogen auf das Gesamtgewicht der Vinylidenchloridmonomereinheiten, der hydrophilen Vinylmonomereinheiten und der Acrylnitrilmonomereinheiten des flammhemmenden, modifizierten, auf Polyacrylnitril basierten Copolymers.

8. Verwendung von Acrylnitril zur Herstellung eines flammhemmenden, modifizierten, auf Acrylnitril basierten Copolymers, die Folgendes umfasst:

(a) Polymerisieren einer ersten Zusammensetzung, um eine erste Copolymerlösung zu erhalten, die ein erstes Copolymer einschließt;
(b) Polymerisieren einer zweiten Zusammensetzung, um eine zweite Copolymerlösung zu erhalten, die ein zweites Copolymer einschließt; und
(c) Mischen der ersten und zweiten Copolymerlösung, um eine flammhemmende, modifizierte, auf Acrylnitril basierte Copolymerlösung zu erhalten, die ein flammhemmendes, modifiziertes, auf Acrylnitril basiertes Copolymergemisch enthält;

wobei die Verwendung **dadurch gekennzeichnet ist, dass**:

die erste Zusammensetzung Folgendes einschließt: Acrylnitril, ein halogenhaltiges Vinylmonomer, mindestens ein hydrophiles Vinylmonomer, ein polares Lösungsmittel und einen Reaktionsstarter, wobei das halogenhaltige Vinylmonomer Vinylidenchlorid einschließt;
bezogen auf das Gesamtgewicht von Vinylidenchlorid, des hydrophilen Vinylmonomers und von Acrylnitril der ersten Zusammensetzung, das Vinylidenchlorid der ersten Zusammensetzung in einer Menge im Bereich von 10 bis 40 Gew.-% vorliegt und das hydrophile Vinylmonomer in einer Menge im Bereich von 5 bis 50 Gew.-% vorliegt;
das erste Copolymer ein gewichtsmittleres Molekulargewicht im Bereich von 70 000 bis 80 000 aufweist;
die zweite Zusammensetzung Folgendes einschließt: Acrylnitril, ein halogenhaltiges Vinylmonomer, das polare Lösungsmittel und den Reaktionsstarter, wobei das halogenhaltige Vinylmonomer der zweiten Zusammensetzung Vinylidenchlorid einschließt;
bezogen auf das Gesamtgewicht von Vinylidenchlorid und Acrylnitril der zweiten Zusammensetzung, Vinylidenchlorid der zweiten Zusammensetzung in einer Menge im Bereich von 40 bis 60 Gew.-% vorliegt;
das zweite Copolymer ein gewichtsmittleres Molekulargewicht im Bereich von 50 000 bis 60 000 aufweist; und das flammhemmende, modifizierte, auf Acrylnitril basierte Copolymergemisch ein viskositätsmittleres Molekulargewicht im Bereich von 50 000 bis 80 000 aufweist und Folgendes enthält: 30 bis 46 Gew.-% an Vinylidenchloridmonomereinheiten, 1 bis 5 Gew.-% an hydrophilen Vinylmonomereinheiten und 49 bis 69 Gew.-% an Acrylnitrilmonomereinheiten, bezogen auf das Gesamtgewicht der Vinylidenchloridmonomereinheiten, der hydrophilen Vinylmonomereinheiten und der Acrylnitrilmonomereinheiten des flammhemmenden, modifizierten, auf Acrylnitril basierten Copolymergemisches.

9. Verwendung nach Anspruch 8, **dadurch gekennzeichnet, dass** die Polymerisation in den Schritten (a) und (b) bei einer Temperatur im Bereich von 20 bis 70°C durchgeführt wird.

10. Verwendung nach Anspruch 8 oder Anspruch 9, **dadurch gekennzeichnet, dass** das Gewichtsverhältnis der ersten Copolymerlösung zu der zweiten Copolymerlösung im Schritt (c) im Bereich von 0,1 : 1 bis 10 : 1 liegt.

**11.** Verwendung nach einem der Ansprüche 8 bis 10, **dadurch gekennzeichnet, dass**:

(i) das hydrophile Vinylmonomer aus einem Sulfongruppe-haltigen Vinylmonomer und einem Carboxylgruppe-haltigen Vinylmonomer ausgewählt ist und/oder (ii) die erste Zusammensetzung weiter einen Vergilbungsinhibitor einschließt.

**12.** Verwendung nach einem der Ansprüche 8 bis 11, weiter **gekennzeichnet durch**:

(d) Entfernen eines Teils des polaren Lösungsmittels aus der flammhemmenden, modifizierten, auf Acrylnitril basierten Copolymerlösung nach Schritt (c), sodass das flammhemmende, modifizierte, auf Acrylnitril basierte Copolymergemisch in einer Menge im Bereich von 20 bis 35 Gew.-%, bezogen auf das Gesamtgewicht der flammhemmenden, modifizierten, auf Acrylnitril basierten Copolymerlösung, vorliegt.

**13.** Verwendung nach einem der Ansprüche 8 bis 12, **dadurch gekennzeichnet, dass** die zweite Zusammensetzung im Wesentlichen frei von dem hydrophilen Vinylmonomer ist.

**14.** Flammhemmendes Fasermaterial, **gekennzeichnet durch** eine auf Acrylnitril basierte Copolymerfaser, die aus einer Zusammensetzung hergestellt ist, die ein flammhemmendes, modifiziertes, auf Acrylnitril basiertes Copolymer einschließt, das nach dem Verfahren nach einem der Ansprüche 1 bis 7 hergestellt wurde, wobei das flammhemmende, modifizierte, auf Acrylnitril basierte Copolymer einen Sauerstoffgrenzindex von größer als 27 % aufweist.

**15.** Flammhemmendes Fasermaterial nach Anspruch 14, weiter **gekennzeichnet durch**: (i) eine Hilfsfaser, die aus der Gruppe ausgewählt ist, die aus einer Naturfaser, einer Kunstfaser und der Kombination davon besteht, und/oder (ii) ein Flammschutzmittel, das aus der Gruppe ausgewählt ist, die aus $Sb_2O_5$, $Sb_2O_3$, $Al(OH)_3$, $Mg(OH)_2$ und Kombinationen davon besteht.

**Revendications**

**1.** Procédé de préparation d'un copolymère à base d'acrylonitrile modifié ignifuge, comprenant les étapes suivantes :

(a) prépolymériser une première composition pour obtenir une première solution de prépolymère incluant un premier prépolymère ;
(b) prépolymériser une seconde composition pour obtenir une seconde solution de prépolymère incluant un second prépolymère ; et
(c) mélanger les première et seconde solutions de prépolymères et soumettre un mélange des premier et second prépolymères à une polymérisation afin d'obtenir une solution de copolymères à base d'acrylonitrile modifié ignifuge contenant un copolymère à base d'acrylonitrile modifié ignifuge ;

le procédé étant **caractérisé en ce que** ;
la première composition inclut de l'acrylonitrile, un monomère vinylique contenant de l'halogène, au moins un monomère vinylique hydrophile, un solvant polaire et un amorceur de réaction, le monomère vinylique contenant de l'halogène incluant du chlorure de vinylidène ;
le chlorure de vinylidène de la première composition est contenu en une quantité comprise dans la gamme de 10 à 40 % en poids et le monomère vinylique hydrophile est contenu en une quantité comprise dans la gamme de 5 à 50 % en poids par rapport au poids total du chlorure de vinylidène, du monomère vinylique hydrophile et de l'acrylonitrile de la première composition ;
le premier prépolymère a un poids moléculaire moyen en poids compris dans la gamme de 30.000 à 40.000 ;
la seconde composition inclut de l'acrylonitrile, un monomère vinylique contenant de l'halogène, le solvant polaire et l'amorceur de réaction, le monomère vinylique contenant de l'halogène de la seconde composition incluant du chlorure de vinylidène ;
le chlorure de vinylidène de la seconde composition est contenu en une quantité comprise dans la gamme de 40 à 60 % en poids par rapport au poids total du chlorure de vinylidène et de l'acrylonitrile de la seconde composition ; et
le copolymère à base d'acrylonitrile modifié ignifuge a un poids moléculaire moyen en poids compris dans la gamme de 50.000 à 80.000 et contient 30 à 46 % en poids d'une unité monomère de chlorure de vinylidène, 1 à 5 % en poids d'une unité monomère vinylique hydrophile et 49 à 69 % en poids d'une unité monomère d'acrylonitrile par rapport au poids total de l'unité monomère de chlorure de vinylidène, de l'unité monomère vinylique hydrophile et de l'unité monomère d'acrylonitrile du copolymère à base d'acrylonitrile modifié ignifuge.

**2.** Procédé de la revendication 1, **caractérisé en ce que** la prépolymérisation dans les étapes (a) et (b) est réalisée sous une température comprise dans la gamme de 20 à 70 °C.

**3.** Procédé de la revendication 1 ou de la revendication 2, **caractérisé en ce que** le rapport de poids de la première solution de prépolymère à la seconde solution de prépolymère dans l'étape (c) est compris dans la gamme de 0,1 : 1 à 10 : 1.

**4.** Procédé de n'importe quelle revendication précédente, **caractérisé en ce que** : (i) le monomère vinylique hydrophile est sélectionné parmi un monomère vinylique contenant un groupe sulfonique et un monomère vinylique contenant un groupe carboxylique, et/ou (ii) la première composition inclut en outre un inhibiteur du jaunissement.

**5.** Procédé de n'importe quelle revendication précédente, **caractérisé en outre par** l'étape consistant à :

(d) retirer une partie du solvant polaire de la solution de copolymères à base d'acrylonitrile modifiée ignifuge après l'étape (c), de sorte que le copolymère à base d'acrylonitrile modifié ignifuge soit contenu en une quantité comprise dans la gamme de 20 à 35 % en poids par rapport au poids total de la solution de copolymères à base d'acrylonitrile modifié ignifuge.

**6.** Procédé de n'importe quelle revendication précédente, **caractérisé en ce que** le rapport de poids du chlorure de vinylidène à l'acrylonitrile de la première composition est compris dans la gamme de 2 : 1 à 3,5 : 1 et le second prépolymère a un poids moléculaire moyen en poids compris dans la gamme de 30.000 à 40.000.

**7.** Procédé de n'importe quelle revendication précédente, **caractérisé en ce que** :

le chlorure de vinylidène de la première composition est contenu en une quantité comprise dans la gamme de 20 à 30 % en poids, le monomère vinylique hydrophile est contenu en une quantité comprise dans la gamme de 5 à 15 % en poids par rapport au poids total du chlorure de vinylidène, du monomère vinylique hydrophile et de l'acrylonitrile de la première composition et le rapport de poids du chlorure de vinylidène à l'acrylonitrile de la première composition est compris dans la gamme de 2 : 1 à 3,5 : 1 ;

le chlorure de vinylidène de la seconde composition est contenu en une quantité comprise dans la gamme de 45 % en poids à 55 % en poids par rapport au poids total du chlorure de vinylidène et de l'acrylonitrile de la seconde composition ; et

le copolymère à base d'acrylonitrile modifié ignifuge contient 38 à 42 % en poids de l'unité monomère de chlorure de vinylidène, 2,5 à 5 % en poids de l'unité monomère vinylique hydrophile, et 55,5 à 59,5 % en poids de l'unité monomère d'acrylonitrile par rapport au poids total de l'unité monomère de chlorure de vinylidène, de l'unité monomère vinylique hydrophile et de l'unité monomère d'acrylonitrile du copolymère à base de polyacrylonitrile modifié ignifuge.

**8.** Utilisation de l'acrylonitrile pour la préparation d'un copolymère à base d'acrylonitrile modifié ignifuge, comprenant les étapes suivantes :

(a) polymériser une première composition pour obtenir une première solution de copolymères incluant un premier copolymère ;

(b) polymériser une seconde composition pour obtenir une seconde solution de copolymères incluant un second copolymère ; et

(c) mélanger les première et seconde solutions de copolymères pour obtenir une solution de copolymères à base d'acrylonitrile modifié ignifuge contenant un mélange de copolymères à base d'acrylonitrile modifié ignifuge ;

l'utilisation étant **caractérisée en ce que** ;

la première solution inclut de l'acrylonitrile, un monomère vinylique contenant de l'halogène, au moins un monomère vinylique hydrophile, un solvant polaire, et un amorceur de réaction, le monomère vinylique contenant de l'halogène incluant du chlorure de vinylidène ;

le chlorure de vinylidène de la première composition est contenu en une quantité comprise dans la gamme de 10 à 40 % en poids et le monomère vinylique hydrophile est contenu en une quantité comprise dans la gamme de 5 à 50 % en poids par rapport au poids total du chlorure de vinylidène, du monomère vinylique hydrophile et de l'acrylonitrile de la première composition ;

le premier copolymère a un poids moléculaire moyen compris dans la gamme de 70.000 à 80.000 ;

la seconde composition inclut de l'acrylonitrile, un monomère vinylique contenant de l'halogène, le solvant polaire et l'amorceur de réaction, le monomère vinylique contenant de l'halogène de la seconde composition incluant du chlorure de vinylidène ;

le chlorure de vinylidène de la seconde composition est contenu en une quantité comprise dans la gamme de 40 à 60 % en poids par rapport au poids total du chlorure de vinylidène et de l'acrylonitrile de la seconde composition ;

le second copolymère a un poids moléculaire moyen en poids compris dans la gamme de 50.000 à 60.000 : et

le mélange de copolymères à base d'acrylonitrile modifié ignifuge a une masse moléculaire moyenne déterminée par la viscosité comprise dans la gamme de 50.000 à 80.000, et contient 30 à 46 % en poids d'une unité monomère de chlorure de vinylidène, 1 à 5 % en poids d'une unité monomère vinylique hydrophile, et 49 à 69 % en poids d'une unité monomère acrylonitrile par rapport au poids total de l'unité monomère de chlorure de vinylidène, de l'unité monomère vinylique hydrophile et de l'unité monomère d'acrylonitrile du mélange de copolymères à base d'acrylonitrile modifié ignifuge.

9. Utilisation de la revendication 8, **caractérisée en ce que** la polymérisation dans les étapes (a) et (b) est réalisée sous une température comprise dans la gamme de 20 à 70 °C.

10. Utilisation de la revendication 8 ou de la revendication 9, **caractérisée en ce que** le rapport de poids de la première solution de copolymères à la deuxième solution de copolymères dans l'étape (c) est compris dans la gamme de 0,1 : 1 à 10 : 1.

11. Utilisation de n'importe laquelle des revendications 8 à 10, **caractérisée en ce que** : (i) le monomère vinylique hydrophile est sélectionné parmi un monomère vinylique contenant un groupe sulfonique et un monomère vinylique contenant un groupe carboxylique ; et/ou (ii) la première composition inclut en outre un inhibiteur du jaunissement.

12. Utilisation de n'importe laquelle des revendications 8 à 11, **caractérisée en outre par** l'étape consistant à :

(d) retirer une partie du solvant polaire de la solution de copolymères à base d'acrylonitrile modifié ignifuge selon l'étape (c), de sorte que le mélange de copolymères à base d'acrylonitrile modifié ignifuge soit contenu en une quantité comprise dans la gamme de 20 à 35 % en poids par rapport au poids total de la solution de copolymères à base d'acrylonitrile modifié ignifuge.

13. Utilisation de n'importe laquelle des revendications 8 à 12, **caractérisée en ce que** la seconde composition est substantiellement exempte du monomère vinylique hydrophile.

14. Matériau fibreux ignifuge **caractérisé par** une fibre de copolymère à base d'acrylonitrile qui est fabriquée à partir d'une composition incluant un copolymère à base d'acrylonitrile modifié ignifuge préparé selon le procédé revendiqué dans n'importe laquelle des revendications 1 à 7, le dit copolymère à base d'acrylonitrile modifié ignifuge ayant un indice d'oxygène limitant supérieur à 27 %.

15. Matériau fibreux ignifuge de la revendication 14, étant en outre **caractérisé par** : (i) une fibre auxiliaire sélectionnée dans le groupe constitué d'une fibre naturelle, d'une fibre synthétique et d'une combinaison de celles-ci, et/ou (ii) d'un ignifugeant sélectionné dans le groupe constitué de $Sb_2O_5$, $Sb_2O_3$, $Al(OH)_3$, $Mg(OH)_2$ et de combinaisons de ceux-ci.